(19) Europäisches Patentamt
European Patent Office
Office européen des brevets

(11) **EP 1 841 519 B1**

(12) **EUROPEAN PATENT SPECIFICATION**

(45) Date of publication and mention
of the grant of the patent:
**13.11.2019 Bulletin 2019/46**

(51) Int Cl.:
***B01J 8/00*** *(2006.01)*      ***B01D 45/02*** *(2006.01)*
***C10G 11/18*** *(2006.01)*

(21) Application number: **05825946.6**

(22) Date of filing: **22.12.2005**

(86) International application number:
**PCT/NL2005/000881**

(87) International publication number:
**WO 2006/071109 (06.07.2006 Gazette 2006/27)**

(54) **METHOD FOR PYROLYSIS/GASIFICATION OF BIOMASS IN A PLANT WITH DIPLEG**

VERFAHREN ZUR PYROLYSE/VERGASUNG VON BIOMASSE IN EINER ANLAGE MIT DIPLEG

PROCÉDÉ POUR LA PYROLYSE/GAZÉIFICATION DE BIOMASSE DANS UNE INSTALLATION COMPORTANT UN PIED PLONGEANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.12.2004 NL 1027932**

(43) Date of publication of application:
**10.10.2007 Bulletin 2007/41**

(73) Proprietor: **BTG Bioliquids B.V.
7545 PN Enschede (NL)**

(72) Inventors:
• **VENDERBOSCH, Robertus, Hendricus
NL-7511 AE Enschede (NL)**
• **ASSINK, Daan
NL-7511 NH Enschede (NL)**
• **GANSEKOELE, Elwin
NL-7521 WL Enschede (NL)**

(74) Representative: **Van Breda, Jacobus et al
Octrooibureau Los & Stigter B.V.
Weteringschans 96
1017 XS Amsterdam (NL)**

(56) References cited:
FR-A- 2 589 875          US-A- 3 051 629
US-A1- 2003 101 850     US-A1- 2003 143 126

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for pyrolysis/gasification of biomass in a plant having an inlet for a charge of biomass and comprising a first reactor and a second reactor in series with the first reactor, wherein the first reactor feeds the second reactor, said plant further comprising a dipleg.

The term dipleg here refers to a fall tube in which solid matter is collected. To this end solid matter is introduced into the dipleg at the top side. In order to prevent the solid matter from simply flowing out, the dipleg is closed off at the bottom side. If desired, the solid matter can be removed from the dipleg via an outlet at the bottom side. This outlet is generally provided in the wall of the dipleg. Here advantage is taken of the fact that solid matter in the form of particles does not flow away sideways if this solid matter is piled up like a packed bed. The solid matter can only be removed sideways from the dipleg if a discharging means is provided, for example, a screw conveyor, a fluid supply such as gas, or another suitable means. Another possibility is the provision of a valve, which in the closed condition retains the solid matter and in the open position allows the solid matter to flow away vertically. If such a feature is provided, it will in general not be necessary to provide separate discharging means.

The following will substantially concern a dipleg wherein the wall of the dipleg is provided with an outlet and wherein separate discharging means are required to facilitate the removal of solid matter from the dipleg as desired.

The height of the dipleg, or of the solid matter in the dipleg, depends on several factors. If the solid matter is to be removed from the dipleg via the outlet with the aid of a fluid, for example gas, the height of the solid matter will need to be such that the gas introduced near the bottom side does not lift the solid matter. The object being only to obtain a movement out of the outlet of the dipleg. The minimum height the dipleg has to have in order to prevent fluid flowing upward is determined by the flow density of the material ($\rho_s$), and the pressure drop $\Delta P$ that the gas has to overcome in order to flow vertically upward. This height is determined by the following equation:

$$H_{min} = \Delta P : (\rho_s \times g).$$

g is the gravitation constant.

A dipleg is used not only in cyclones, but often also in fluidised beds, for metering the solid matter and to separate two spaces from each other with respect to the gas phase in the two spaces.

A problem arising with a dipleg as mentioned above is its length. As in particular the solid matter separated from gas in cyclones has a very low density, the dipleg needs to have a considerable length. In many cases, therefore the maximum height of a plant is determined by the length of the dipleg(s).

US2003/0143126 discloses a regenerator vessel provided with means to supply catalyst particles, means to supply an oxygenate gas, means to discharge regenerated catalyst, means to discharge combustion gases from the vessel and means to separate entrained catalyst from the combustion gases, which vessel also comprises, in use, a fluidised bed zone of catalyst at its lower end, wherein in the fluidised bed zone a vertically extending partition, which partition is provided with one or more openings, is present dividing the fluidised bed zone in a dense phase fluidised bed zone and a fast-fluidised bed zone, the dense phase fluidised bed zone provided with the means to supply catalysts and the fast-fluidised bed zone provided with the means to supply an oxygenate gas at its lower end.

US2003/0101850 discloses a procedure for the continuous manufacture of powdered materials starting from solid raw materials in powder form based on synchronizing feed or loading of raw materials or reagents into a tube which constitutes the reactor itself, with the output of the material itself obtained, carrying out the extraction in the lower part, all this carried out in continuous fashion, i.e., as the material is introduced into the tube the synthesis takes place and the product or resulting material is extracted from the reaction without the need to stop the reactor.

FR 2 589 875 discloses a process for catalytic cracking in a fluid bed of a hydrocarbon feedstock subjected to a pre-treatment and an apparatus permitting this process to be implemented. The pre-treatment consists in bringing at least part of the feedstock (in vaporised form) and at least part of the catalyst particles into contact in a vessel with a bed of solid particles other than the catalyst particles concurrently from the top downwards or from the bottom upwards, at a temperature substantially equal to the temperature which prevails at the entry of the catalytic reaction zone. At the end of a stirring operation between at least the solid particles and the said part of the feedstock, the latter, freed from most of the residual products, is separated from the solid particles and conveyed with the catalyst particles into the reaction zone.

US 3,051,629 discloses a method of preparing metallurgical fuel briquets which comprises carbonizing a non-caking coal in a fluidized state at low temperature until substantially complete evolution of tar has occurred, whereby a particulate char is obtained as a residue, heating said char in particulate form as a suspension -in hot gases to an elevated temperature above the carbonization temperature at which said char was generated to effect shrinkage of said char, passing said heated char at said elevated temperature as a dilute phase suspension through a coking zone in heat exchange relation with raw briquets whereby said briquets are coked, recovering char from the cooled dilute phase suspension, forming raw briquets from said char for transfer to said coking zone, and recovering coked briquets from said coking zone.

The object of the invention is to provide an improved method for pyrolysis/gasification of biomass.

According to the invention a method for pyrolysis/gasification of biomass is proposed in accordance with the appended claim.

According to the invention the second reactor is provided with the inlet for the charge of biomass, and the cyclone is a first portion of a first dipleg which provides an inlet for solid matter above a second portion of the first dipleg which has an outlet for solid matter at a bottom side, wherein the dipleg is further provided with an additional inlet formed by a transition from the cyclone to the second portion at a position above the outlet, wherein said outlet of the first dipleg feeds a riser pipe that connects to the first reactor, wherein the second reactor feeds the cyclone, and the first reactor connects through a second dipleg comprising an inlet for solid matter at its top side and an outlet for solid matter at its bottom side to the additional inlet of the first dipleg.

As mentioned the additional inlet of the first dipleg is provided at a position above the outlet of the dipleg. In this way the solid matter supplied via the inlet at the top side of the dipleg is combined with additional solid matter as required. In this way the density of the combination of solid matter and additional solid matter may be adjusted as required. To this end the additional solid matter can have a different density compared to the solid matter supplied via the top side, and may be supplied in an amount so as to bring the combination of solid matter and additional solid matter to a preference value.

If the additional solid matter has a higher density than the solid matter, the combination of solid matter and additional solid matter will have a higher density compared to the density of the solid matter only. In comparison to using solid matter only, the minimum height of the dipleg may then be reduced.

This makes it possible at all times to make optimal use of the dipleg, irrespective of the type of solid matter supplied via the top side.

Unexpectedly it has been shown that the flow behaviour of the solid matter may also be improved in a very positive manner by supplying as additional solid matter a material whose diameter differs from that of the solid matter. Especially if the solid matter supplied via the top side is of a very small dimension, for example fly ash, the additional solid matter to be supplied is advantageously a material whose diameter is larger and/or whose density is higher. This improves the flow behaviour of the combination of solid matter and additional solid matter at the outlet considerably.

The solid matter separated in a cyclone from a supplied mixture of gas and solid matter is thus collected in the dipleg. The dipleg as used in the method according to the invention can be operated more reliably than the usual dipleg. The cyclone will also benefit from a greater operational reliability. Since the height of the dipleg will be less than that of the usual prior art dipleg, the cyclone may be positioned at a lower height. Consequently, the distance to be covered by the mixture of gas and solid matter that is supplied to the cyclone for separation will be shorter. This will increase the operational reliability of the cyclone further.

It is possible that the outlet of the dipleg comprises a closing device. Such a closing device may, for example, consist of a valve. Examples are closing devices or "locks", wherein the solid matter is blown away by means of a gas stream, such as for example an L-valve, a V-valve or a so-called seal pot. In the latter case a fluid-bed valve is used. See, for example, D. Kunii and O. Levenspiel, 1991, Fluidization Engineering, 2nd edition, Butterworth-Heinermann.

The dipleg may comprise a discharging means for discharging solid matter via the outlet of the dipleg. Such an outlet means may be, for example, a screw conveyor, a fluid supply such as gas, a conveyor belt or chain provided with a catch element, or the like. This ensures that solid matter in the dipleg is discharged adequately.

The dipleg is fed with solid matter released during the conversion of the biomass and that comprises a large share of carbon. The carbon may be mixed with solid matter that is used for the conversion of the biomass. Combustion of the carbon will heat the solid matter, preferably to a temperature that suffices to effect the conversion of the biomass.

Herein below the invention will be further elucidated by way of several figures.

Fig. 1 shows a schematic cross-sectional view of a dipleg

Fig. 2 shows a schematic cross-sectional view of a dipleg according to the prior art.

Fig. 3 shows a schematic cross-sectional view of a dipleg as used in a method according to the invention.

Fig. 4 shows a schematic flow sheet of a plant for converting organic matter, e.g. biomass.

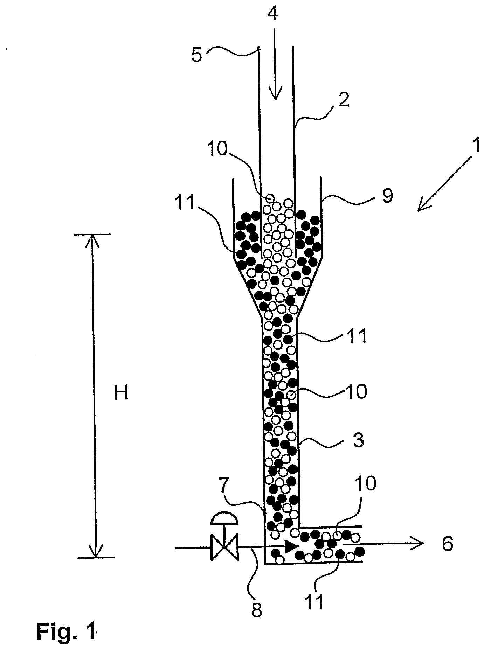

Fig. 1 shows a dipleg 1. The dipleg 1 is comprised of a first portion 2 and a second portion 3. An inlet 4 for the dipleg 1 is provided at the top side of the first portion 2. Via this inlet 4 solid matter 10 is supplied. This solid matter 10 may, for example, come from a cyclone.

The second portion 3 is located under the first portion 2 and in its extended direction. When solid matter 10 that is introduced via inlet 4 into the first portion 2 moves downward, it will arrive in the second portion 3.

The transition from the first portion 2 to the second portion 3 is, as shown in Fig. 1, formed by an additional inlet 9. Via this additional inlet 9, whose shape is not limited to that shown in Fig. 1, additional solid matter 11 is introduced. The combination of solid matter 10 and additional solid matter 11 will be transported downward via the second portion 3 of the dipleg 1. At the bottom side 7 of the second portion 3 of the dipleg 1, the combination of solid matter 10 and additional solid matter 11 is removed via the outlet 6 of the dipleg. This removal will only be possible if discharging means 8 are provided. In the Fig. a fluid inlet 8, for example a gas inlet 8, is provided, which realises the removal of the combination of solid matter 10 and additional solid matter 11 from the dipleg. The removal of this combination of solid matter 10 and additional solid matter 11 from the bottom end of the second portion 3 causes the solid matter 10 and the additional solid matter 11 in the dipleg to move downward. In the course of this downward movement the solid matter 10 will mix with or become combined with the additional solid matter 11 in the second portion 3 of the dipleg 1.

If via the discharging means 8 gas is introduced at the bottom of the dipleg 1, the gas (or some of it) may move upward through the second portion 3 of the dipleg 1. In order to avoid this, the weight of the solid matter 10 and the additional solid matter 11 must be such that the pressure drop over the height H of the material in the dipleg 1 is greater than the pressure difference in the gas inlet 8 and the discharge of the solid matter bed via the discharge 6 (and subsequently to an optional second reaction system) in the dipleg 1. If the solid matter 10 has a low density, the height H needs to be very great. According to the invention, this height H may be reduced if as additional solid matter 11 a material is supplied whose density is higher than that of the solid matter 10. As opposed to a dipleg wherein such an inlet 9 for the additional solid matter 11 is not provided, the height H and thus also the height of the dipleg 1 may therefore be reduced.

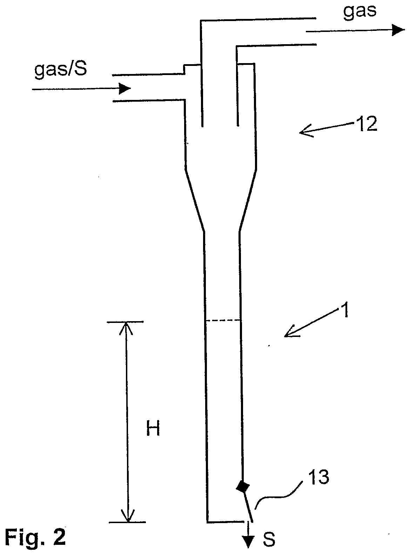

Fig. 2 shows a dipleg 1 coupled with a cyclone, in accordance with the prior art. The dipleg 1 is comprised of a tube, which tube is at the bottom side, in a side wall, provided with a valve 13. This may be a valve of the kind that opens by itself when the static pressure of the solid matter is high enough. Although no discharging means 8 are shown, in practice they will generally be present. The discharge of the solid matter is schematically indicated with the arrow S.

The operation of the cyclone 12 in fig. 2 does not differ from the usual operation of a cyclone.

The material separated in a cyclone from a gas mixture is in general relatively small and very light. It is precisely the very small and light solid matter separated in a cyclone that is liable to cause obstruction in a dipleg. Such obstructions occur in the dipleg itself as well as at its outlet. When such obstructions occur in practice, the operation of a cyclone has to be stopped. Naturally, this causes very many problems.

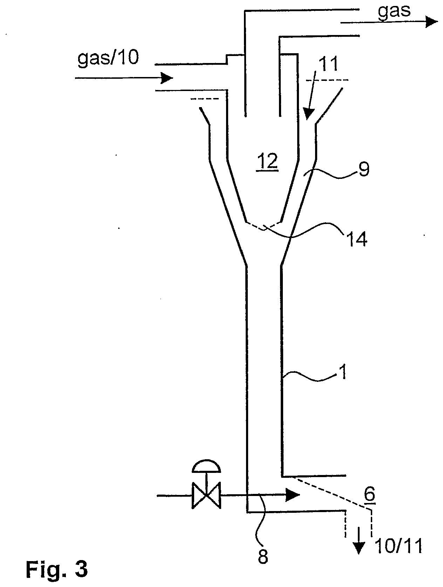

Fig. 3 shows a dipleg as used in the method according to the invention. The dipleg 1 comprises a first portion, in this case formed by the cyclone 12. The additional inlet 9 is provided near the solid matter outlet of the cyclone 12. The solid matter separated in the cyclone will enter into the dipleg 1 directly from the outlet 14 of the cyclone 12. Additional solid matter is fed into the dipleg 1 via the additional inlet 9.

The plant shown in Fig. 3 may be operated in different ways. Solid matter from the cyclone will collect in the dipleg 1. Additional solid matter 11 introduced via the additional inlet 9 will also collect in the dipleg 1. This combination may, for the most part, fill the dipleg 1. In general the height will be such that gas that is introduced via the fluid inlet 8, will be unable to escape upward via the dipleg 1. When gas is introduced via the fluid inlet 8, the combination of solid matter and additional solid matter will be removed from the dipleg 1 via the outlet 6.

It is possible to realise a continuous gas supply via the discharging means 8, such that there is a continuous removal of material from the dipleg 1 via the outlet 6. If the supply of solid matter from the cyclone does not suffice to maintain an adequate bed height H in the dipleg 1, extra additional solid matter may be supplied via the additional inlet 9 in the dipleg 1. This will prevent the matter in the dipleg 1 from being removed upward by the gas pressure via the discharging means 8. In principle, the system even works without the supply of the solid matter 10, with the advantage that there is always a lock.

A particular advantage of the configuration as shown in Fig. 3, is embodied in the possibility to separate a combustible solid substance from the gas mixture supplied to the cyclone, which is collected in the dipleg 1. This combustible solid substance may be combined, for example, with an inert material or with a combustible material, in this case formed by the additional solid matter supplied via the additional inlet 9. If via the discharging means 8 a reactive gas is supplied, for example oxygen, the combustible solid substance may be reacted, optionally together with the combustible additional solid matter. Other examples of applications are of course also possible.

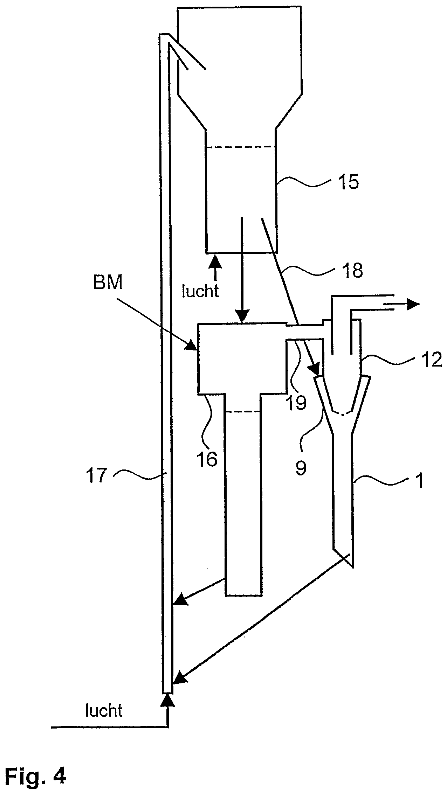

A plant for executing a method for pyrolysis/gasification of biomass according to the invention is shown in Fig. 4. Fig. 4 shows a plant for the pyrolysis/gasification of biomass. Biomass BM is added to a reactor 16. During the pyrolysis/gasification condensable and non-condensable gasses, as well as carbon, are formed. Via the reactor outlet 19 the thus formed gasses are discharged from the reactor 16 together with a portion of inert particles and the produced carbon. Apart from the supplied biomass and the produced carbon, the reactor 16 contains a large portion of inert material functioning as heat carrier. This may be, for example, sand or a catalytically active material. As already mentioned, the gas mixture from the reactor 16 is via the exhaust 19 fed to a cyclone 12. In the cyclone 12, the gas is separated from the entrained solid particles, which include sand and carbon. This solid matter is collected in the dipleg 1 under the cyclone 12. In the usual manner said solid matter is subsequently via a riser pipe 17 returned to the reactor 15, where the carbon is combusted in order to heat the inert heat carrier present in the reactor 15. This inert heat carrier from the reactor 15 is subsequently returned to the reactor 16 where it realises the pyrolysis/gasification of the biomass. In order to improve the procedure, inert heat carrier from the reactor 15 is fed as additional solid matter to the dipleg 1. Irrespective of the amount of solid matter fed from the reactor 16 via the outlet 19 into the dipleg 1, it is now possible, for example, to continuously discharge matter from the dipleg 1 via the riser pipe 17 to the reactor 15, which greatly improves the operational reliability.

It is further possible, for example, also via a dipleg positioned under the reactor 16, and which is fed directly from the reactor chamber to, via the riser pipe 17, feed inert heat carrier to the reactor 15.

At its bottom side, the riser pipe 17 may comprise an air inlet. This air will ensure that the carbon supplied from outside the dipleg is suitably combusted in the reactor 15.

It is of course possible to supply air having an increased oxygen content as gas in the bottom of the riser pipe 17. It is also possible to supply any desired combination of oxygen with inert gas or reactive gas, or optionally pure oxygen.

The supply of inert material from the reactor 15 to the additional inlet 9 may be realised, for example, by means of a dipleg 18. This may be a standard dipleg 18 or possibly a component of the dipleg according to the invention.

The flow rate of the solid matter streams may be regulated simply by valves commonly used in the art.

The invention is not limited to the above given embodiments. The invention is only limited by the appended claims.

Principally, it is not necessary for the additional inlet 9 to be located at the halfway position between the top side 5 of the dipleg 1 and its bottom side 7, as shown in Fig. 1. The additional inlet 9 for solid matter may, for example, be located at the same height as the top side 5 of the dipleg 1. This is especially convenient if the density of the material in the dipleg 1 is to be adjusted with additional solid matter. Furthermore, the additional inlet 9 for solid matter may, for example, be located so as to be in direct communication with the outlet 6 of the dipleg 1. The positioning of the additional inlet 9 will be determined only by the process conditions and the applicability in the plant as a whole.

## Claims

1. A method for pyrolysis/gasification of biomass in a plant comprising a first reactor (15), a second reactor (16) in series with the first reactor (15), wherein the first reactor (15) feeds the second reactor (16), said plant further comprising a cyclone (12), , **characterized in that** the cyclone (12) is a first portion of a first dipleg (1) and provides an inlet for solid matter above a second portion (3) of the first dipleg with an outlet for solid matter at a bottom side, wherein the dipleg (1) is further provided with an additional inlet (9) formed by a transition from the cyclone (12) to the second portion at a position above the outlet, and that biomass (BM) is added to the second reactor (16) in which the pyrolysis/gasification takes place and condensable and non-condensable gasses, as well as carbon, are formed, wherein via an outlet (19) of the second reactor (16), the thus formed gasses are discharged together with a portion of inert particles and the produced carbon to the cyclone (12), and wherein apart from the supplied biomass and the produced carbon, said second reactor (16) contains a large portion of inert material functioning as heat carrier, and that in the cyclone (12) gas is separated from entrained solid particles, which include sand and carbon, and said solid matter is collected in the first dipleg (1) and said solid matter is subsequently via a feedline to a riser pipe (17), and via this riser pipe (17) returned to the first reactor (15), where the said carbon is combusted in order to heat an inert heat carrier present in the first reactor (15), which inert heat carrier is subsequently returned from the first reactor (15) to the second reactor (16) where it realises the pyrolysis/gasification of the biomass, and wherein inert heat carrier from the first reactor (15) is fed through a second dipleg (18) which has an inlet for solid matter at its top side and an outlet for solid matter at its bottom side as additional solid matter to the additional inlet (9) of the first dipleg (1).

## Patentansprüche

1. Verfahren zur Pyrolyse/Vergasung von Biomasse in einer Anlage umfassend einen ersten Reaktor (15), einen zweiten Reaktor (16) in Reihe mit dem ersten Reaktor (15), wobei der erste Reaktor (15) den zweiten Reaktor (16) speist, wobei die besagte Anlage ferner einen Zyklon (12) umfasst, **dadurch gekennzeichnet, dass** der Zyklon (12) ein erster Abschnitt eines ersten Diplegs (1) ist und einen Einlass für Feststoffe über einem zweiten Abschnitt (3) des ersten Diplegs mit einem Auslass für Feststoffe an einer Unterseite bereitstellt, wobei der Dipleg (1) ferner mit einem zusätzlichen Einlass (9) bereitgestellt ist, der durch einen Übergang von dem Zyklon (12) zu dem zweiten Abschnitt an einer Position oberhalb des Auslasses gebildet wird, und dass Biomasse (BM) dem zweiten Reaktor (16) zugegeben wird, in dem die Pyrolyse/Vergasung stattfindet und kondensierbare und nicht-kondensierbare Gase sowie Kohlenstoff gebildet werden, wobei über einen Auslass (19) des zweiten Reaktors (16) die so gebildeten Gase zusammen mit einem Anteil von inerten Teilchen und dem erzeugten Kohlenstoff an den Zyklon (12) abgegeben werden, und wobei der besagte zweite Reaktor (16) neben der zugeführten Biomasse und dem erzeugten Kohlenstoff einen großen Anteil des als Wärmeträger fungierenden inerten Materials enthält, und dass in dem Zyklon (12) Gas von mitgeführten Feststoffpartikeln, die Sand und Kohlenstoff beinhalten, getrennt wird und der besagte Feststoff im ersten Dipleg (1) gesammelt wird und der besagte Feststoff anschließend über eine Zuleitung zu einem Steigrohr (17) und über dieses Steigrohr (17) in den ersten Reaktor (15) zurückgeführt wird, wo der besagte Kohlenstoff verbrannt wird, um einen im ersten Reaktor (15) vorhandenen inerten Wärmeträger zu erwärmen, welcher inerte Wärmeträger anschließend von dem ersten Reaktor (15) zu dem zweiten Reaktor (16) zurückgeführt wird, wo er die Pyrolyse/Vergasung der Biomasse realisiert, und wobei der inerte Wärmeträger aus dem ersten Reaktor (15) durch einen zweiten Dipleg (18) geleitet wird, welcher einen Einlass für Feststoffe an seiner Oberseite und einen Auslass für Feststoffe an seiner Unterseite als zusätzliche Feststoffe für den zusätzlichen Einlass (9) des ersten Diplegs (1) aufweist.

porteur inerte est ensuite renvoyé du premier réacteur (15) dans le second réacteur (16) où il réalise la pyrolyse/gazéification de la biomasse, et où un caloporteur inerte issu du premier réacteur (15) est introduit au travers d'un second pied plongeant (18) qui possède une entrée pour la matière solide dans sa partie haute et une sortie pour la matière solide dans sa partie basse en tant que matière solide supplémentaire dans l'entrée supplémentaire (9) du premier pied plongeant (1).

## Revendications

1. Procédé de pyrolyse/gazéification de la biomasse dans une installation comprenant un premier réacteur (15), un second réacteur (16) en série avec le premier réacteur (15), où le premier réacteur (15) alimente le second réacteur (16), ladite installation comprenant en outre un cyclone (12), **caractérisé en ce que** le cyclone (12) est une première partie d'un premier pied plongeant (1) et fournit une entrée pour la matière solide au-dessus d'une seconde partie (3) du premier pied plongeant avec une sortie pour la matière solide dans la partie basse, dans lequel le pied plongeant (1) est pourvu en outre d'une entrée supplémentaire (9) formée par une transition du cyclone (12) vers la seconde partie à un emplacement situé au-dessus de la sortie, et **en ce que** la biomasse (BM) est ajoutée dans le second réacteur (16) dans lequel la pyrolyse/gazéification se déroule et des gaz condensables et non condensables, ainsi que du charbon, sont formés, où, par l'intermédiaire d'une sortie (19) du second réacteur (16), les gaz ainsi formés sont refoulés conjointement avec une partie constituée de particules inertes et le charbon produit vers le cyclone (12), et où à part la biomasse fournie et le charbon produit, ledit second réacteur (16) contient une grande partie constituée de matière inerte fonctionnant comme caloporteur, et **en ce que** dans le cyclone (12) le gaz est séparé des particules solides entraînées, qui comportent du sable et du charbon, et ladite matière solide est collectée dans le premier pied plongeant (1) et ladite matière solide est ensuite transmise par l'intermédiaire d'une conduite d'alimentation à une colonne montante (17), et renvoyées par l'intermédiaire de cette colonne montante (17) dans le premier réacteur (15), où ledit charbon est brûlé afin de chauffer un caloporteur inerte présent dans le premier réacteur (15), lequel calo-

**Fig. 1**

gas/S

gas

12

1

H

**Fig. 2**

13

S

**Fig. 3**

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030143126 A
- US 20030101850 A
- FR 2589875
- US 3051629 A

### Non-patent literature cited in the description

- **D. KUNII ; O. LEVENSPIEL.** Fluidization Engineering. Butterworth-Heinermann, 1991